# EUROPÄISCHE PATENTSCHRIFT

(11) **EP 3 152 407 B1**
(45) Veröffentlichungstag und Bekanntmachung des Hinweises auf die Patenterteilung: **09.05.2018**
(21) Anmeldenummer: 15726506.7
(22) Anmeldetag: 18.03.2015
(51) Int. Cl.: F01D 17/16, F04D 29/00

(54) **LEITSCHAUFELKRANZ, INNENRING UND STRÖMUNGSMASCHINE**
VANE RING, INNER RING, AND TURBOMACHINE
COURONNE D'AUBES FIXES, BAGUE INTÉRIEURE ET TURBOMACHINE

(30) Priorität: 31.03.2014 DE 102014205986
(43) Veröffentlichungstag der Anmeldung: 12.04.2017
(73) Patentinhaber: MTU Aero Engines AG, 80995 München (DE)
(72) Erfinder: WEBER, Julian, 80797 München (DE); GRIESMAIR, Alexander, 80995 München (DE)
(86) Internationale Anmeldenummer: PCT/DE2015/000126
(87) Internationale Veröffentlichungsnummer: WO 2015/149732

(56) Entgegenhaltungen:
- EP-A1- 0 298 894
- EP-A1- 2 696 041
- US-A- 4 834 613
- US-A- 5 421 703

## Beschreibung

Die Erfindung betrifft einen verstellbaren Leitschaufelkranz für eine Strömungsmaschine nach dem Oberbegriff des Patentanspruchs 1, einen Innenring für einen verstellbaren Leitschaufelkranz, sowie eine Strömungsmaschine.

Strömungsmaschinen wie Flugzeugtriebwerke und stationäre Gasturbinen haben zur Einstellung optimaler Betriebsbedingungen regelmäßig zumindest eine verdichterseitige verstellbare Leitschaufelreihe mit einer Vielzahl von um ihre Hochachse verschwenkbaren Leitschaufeln, Die Leitschaufelreihe bildet mit einem Innenring einen sogenannten verstellbaren Leitschaufelkranz. Der Innenring dient zur Stabilisierung der Leitschaufeln und weist eine Vielzahl von radialen Öffnungen oder Ausnehmungen zur Aufnahme jeweils eines schaufelseitigen Lagerzapfens auf. Die äußere Lagerung der Leitschaufeln sowie deren Betätigung erfolgt über Verstellzapfen der Leitschaufeln, die mit einer entsprechenden Verstelleinrichtung zusammenwirken. In den Öffnungen bzw. Ausnehmungen des Innenrings sind Lagerbuchsen eingesetzt, in denen die Lagerzapfen geführt sind. In der DE102006024085A1 wird vorgeschlagen, den Innenring aus zwei halbkreisförmigen Ringsegmenten zu bilden und diese einzeln über den Lagerzapfen der in Gehäusehälften montierten Leitschaufeln abzurollen. Hierzu werden die Ringsegmente auf einen konstanten Spannradius vorgespannt, im Bereich der Lagerzapfen positioniert und dann entspannt. Nach dem Abrollen der halbkreisförmigen Ringsegmente wird ein Dichtungsträger auf diese aufgeschoben. Eine Demontage des Innenrings bzw. des Leitschaufelkranzes erfolgt auf analoge Art und Weise. Die Verformung und Positionierung der Innenringsegmente können über eine in der DE102009004934A1 gezeigte Spannvorrichtung erfolgen.

Die US 5,431,703 A betrifft einen Gattungsgemäßen verstellbaren Leitschaufelkranz mit einem Innenring, der axial geteilt ist, Um Leckageströme zwischen dem Innenring und einem radial innenliegenden Rotor zu reduzieren, sind Dichtfins an dem Rotor angeordnet, die in an dem Innenring radial innenliegenden Einlaufbeläge einlaufen. Hierdurch wird eine Labyrinthdichtung geschaffen, die zwar grundsätzlich eine hohe Abdichtung ermöglicht, allerdings können die Dichtstege irreversible Spalte in das Dichtsegment einreiben, die eine dauerhaft erhöhte Leckage begründen.

In der EP1319844B1 ist ein Innenring für einen verstellbaren Leitschaufelkranz gezeigt, der axial geteilt ist und somit in Strömungsrichtung eines Primärstroms betrachtet ein vorderes Ringsegment und ein hinteres Ringsegment aufweist. Radiale Ausnehmungen zur Aufnahme von Lagerbuchsen und somit der Lagerzapfen sind jeweils hälftig in den Ringsegmenten ausgebildet, die über zwischen den Ausnehmungen angeordneten Schrauben-Mütter-Verbindungen lösbar miteinander verbunden sind.

In der DE 699 00 004 T2 ist ein verstellbarer Leitschaufelkranz gezeigt, dessen Innenring aus zwei halbkreisförmigen Ringsegmenten gebildet ist und an denen jeweils radial innen ein leicht verschleißendes Material als Dichtsegment vorgesehen ist, in das rotorseitige Dichtstege einlaufen können. Hierdurch wird eine Labyrinthdichtung geschaffen, die zwar grundsätzlich eine hohe Abdichtung ermöglicht, allerdings können die Dichtstege irreversible Spalte in das Dichtsegment einreiben, die eine dauerhaft erhöhte Leckage begründen.

Aufgabe der Erfindung ist es, einen verstellbaren Leitschaufelkranz für eine Strömungsmaschine zu schaffen, der reduzierte Leckageumluftmengen ermöglicht. Des Weiteren ist es Aufgabe der Erfindung, einen kompakten Innenring für einen derartigen Leitschaufelkranz zu schaffen. Ferner ist es Aufgabe der Erfindung, eine Strömungsmaschine zu schaffen, die einen hohen Verdichterwirkungsgrad aufweist.

Diese Aufgabe wird gelöst durch einen verstellbaren Leitschaufelkranz mit den Merkmalen des Patentanspruchs 1, durch einen Innenring mit den Merkmalen des Patentanspruchs 9 und durch eine Strömungsmaschine mit den Merkmalen des Patentanspruchs 10.

Ein erfindungsgemäßer verstellbarer Leitschaufelkranz einer Strömungsmaschine hat eine Vielzahl von eine Leitschaufelreihe bildenden Leitschaufeln und einen Innenring zum Stabilisieren der Leitschaufelreihe. Die Leitschaufeln haben jeweils einen bezogen auf eine Kranzlängsachse radial äußeren Verstellzapfen zum Zusammenwirken mit einer Verstelleinrichtung. Der Innenring ist axial geteilt und hat in Richtung eines Primärstroms ein vorderes Ringsegment und ein hinteres Ringsegment. Erfindungsgemäß trägt der Innenring eine Bürstendichtung zum Abdichten eines Spaltes zwischen dem Innenring und einem gegenüberliegenden Rotorabschnitt.

Durch die erfindungsgemäße Vorsehung einer Bürstendichtung wird die Leckageumluftmenge reduziert, da weder die Bürstendichtung Spalte in den gegenüberliegenden Rotorabschnitt einreiben kann, noch der gegenüberliegende Rotorabschnitt Spalte in die Bürstenrichtung einreiben kann. Die Bürsten bzw. der Bürstenabschnitt der Bürstendichtung geben/gibt bei einer Relativbewegung des Rotors zum Stator elastisch nach, so dass selbst nach großen Relativbewegung keine plastischen Spalte erhalten bleiben. Zudem wird die Teilezahl reduziert, da zum Beispiel rotorseitige Dichtstege sowie deren Verschleißschutzschicht entfallen. Ferner wird durch die reduzierte Teilezahl der Bürstendichtung Gewicht eingespart. Bevorzugterweise ist die Bürstendichtung radial orientiert, allerdings kann sie auch axial oder diagonal zur Kranzlängsachse orientiert sein. Je nach Orientierung der Bürstendichtung bzw. deren Bürstenabschnitt ist der gegenüberliegende Rotorabschnitt auszurichten.

Bei einem Ausführungsbeispiel ist die Bürstendichtung mit ihrem Halteabschnitt in einen Aufnahmeraum zwischen den Ringsegmenten angeordnet, der von beiden Ringsegmenten begrenzt ist. Beim Montieren der Ringsegmente erfolgt somit ein gleichzeitiges Festsetzen der Bürstendichtung. Es erfolgt eine Funktionsintegration, die zu einer Montagevereinfachung und somit zu einer Kostenersparnis führt.

Bei einem bevorzugten Ausführungsbeispiel ist die Bürstendichtung mit ihrem Bürstenabschnitt durch einen Durchführungsbereich aus dem Aufnahmeraum hinausgeführt ist, der breiter als der Bürstenabschnitt im Durchführungsbereich ist. Hierdurch wird die Flexibilität der Bürstendichtung erhöht, da der Bürstenabschnitt eine große freie Länge hat. Er kann somit beginnend an dem Halteabschnitt elastisch nachgeben.

Bevorzugterweise liegt der Bürstenabschnitt am vorderen Ringsegment an. Diese Maßnahme ermöglicht eine genaue Ruhelage sowie Betriebslage und auch eine visuelle Kontrolle der Einbaulage.

Die Montage der Bürstendichtung lässt sich vereinfachen, wenn sie aus Ringelemententeilen besteht. Bevorzugterweise besteht sie aus zwei Ringelementenhälften bzw. Ringelemententeilen, die jeweils einen Winkel von 180° umspannen bzw. deren Trennebene gleich einer umfangsseitigen Trennebene des Innenrings ist. Hierdurch kann die Bürstendichtung bequem mit dem Innenring in Gehäusehälften einer Strömungsmaschine montiert werden. Diese Bauweise kann auch entsprechend segmentiert ausgeführt sein. Beispielsweise kann die Bürstendichtung aus drei, vier oder mehr Ringelemententeilen bestehen oder ein geschlitzer Federring sein.

Die Verbindung der Ringsegmente des Innenrings kann beispielsweise mittels Verschraubung oder Vernietung erfolgen. Beide Verbindungsarten erlauben eine belastbare Verbindung der Ringsegmente und somit auch eine belastbare Positionierung der Bürstendichtung. Durch die Verschraubung oder Vernietung wird die Bürstendichtung in radialer Richtung durch einen Formschluss und in Umfangsrichtung durch einen Kraftschluss gesichert. Bevorzugterweise werden die Ringsegmente miteinander vernietet, da eine Vernietung mit weniger Aufwand durchgeführt werden kann als eine Verschraubung. Dennoch können neben einer Kraftschluss und/oder Formschlussverbindung auch ein Stoffschluss oder ein Reibschluss geeignete Verbindungsarten sein. Beispielsweise ist es in Maschinenbereichen mit einer reduzierten Temperatur wie im Verdichterbereich, grundsätzlich vorstellbar, die Ringsegmente miteinander zu verkleben.

Bei einem Ausführungsbeispiel sind die Ringsegmente unterschiedlich hergestellt. Beispielsweise ist das vordere Ringsegment ein Schmiedeteil, währen das hintere Ringsegment ein umgeformtes Blechprofil ist. Ebenso ist eine Kombination von einem Gussteil mit einem Blechprofil vorstellbar. Der Vorteil in der unterschiedlichen Herstellung erlaubt eine Gewichtsoptimierung, da die Ringsegmente nach ihren thermischen, mechanischen und chemischen Belastungen optimiert werden können.

Bevorzugterweise sind die Leitschaufeln im Innenring über einen Schaufelteller geführt. Sie sind also radial innen lagerzapfenfrei. Der Wegfall des Lagerzapfens und somit auch der Wegfall von Lagerbuchsen und stattdessen die unmittelbare Lagerung der Leitschaufeln über ihre Schaufelteller in dem Innenring ermöglicht, den Innenring mit einer reduzierten Höhe im Vergleich zu den bekannten Innenringen auszubilden, was die Verwendung in Kleinverdichtern ermöglicht. Zudem werden durch die reduzierte Teileanzahl Leckageverluste, Gewicht und Kosten des Leitschaufelkranzes reduziert. Durch Entfall der Lagerzapfen und Lagerbuchsen wird ein radialer Bauraum gewonnen, der eine optimale Orientierung und Positionierung der Bürstendichtung erlaubt. Per se erlaubt der vergrößerte Bauraum die Auswahl der Bürstendichtung, die für die jeweilige Strömungsmaschine die optimalen Eigenschaften aufweist. Die Verbindungselemente wie Schrauben und Nieten können dabei derart angeordnet werden, dass eine leichte Zugänglichkeit zu ihnen erfolgt und somit eine einfache Montage ermöglicht ist.

Ein bevorzugter Innenring für einen erfindungsgemäßen Leitschaufelkranz hat eine Bürstendichtung zum Abdichten eines Spaltes zwischen dem Innenring und einem gegenüberliegenden Rotorabschnitt. Ein derartiger Innenring zeichnet sich durch eine kompakte und gewichtssparende Bauweise aus. Der erfindungsgemäße Innenring erfüllt zwei wesentliche Funktionen. Zum einen lagert er die Leitschaufeln radial innen. Zum anderen bildet er einen Aufnahmeraum für die Bürstendichtung und somit für die gesamte "Inner-Air-Seal", da rotorseitige Dichtstege entfallen. Die "Inner-Air-Seal" ist somit vollständig in den Innenring integriert. Er findet im Gegensatz zu herkömmlichen Innenringen mit einer beispielweise in Umfangsrichtung aufschiebbaren Wabendichtung eine Funktionsintegration der "Inner-Air-Seal" in den Innenring statt.

Eine bevorzugte Strömungsmaschine hat zumindest einen erfindungsgemäßen verstellbaren Leitschaufelkranz, der eine Bürstendichtung zum Abdichten eines Spaltes zwischen dem Innenring und einem gegenüberliegenden Rotorabschnitt hat. Hierdurch ist ein hoher Verdichterwirkungsgrad erzielbar, da Leckageumlauftmengen im Bereich des Leitschaufelkranzes reduziert werden

Sonstige vorteilhafte Ausführungsbeispiele der Erfindung sind Gegenstand weiterer Unteransprüche.

Im Folgenden wird ein bevorzugtes Ausführungsbeispiel der Erfindung anhand von schematischen Darstellungen näher erläutert. Es zeigen:
- Figur 1: einen Längsschnitt durch eine Strömungsmaschine im Bereich eines erfindungsgemäßen verstellbaren Leitschaufelkranzes, und
- Figur 2: eine Detaildarstellung aus Figur 1.

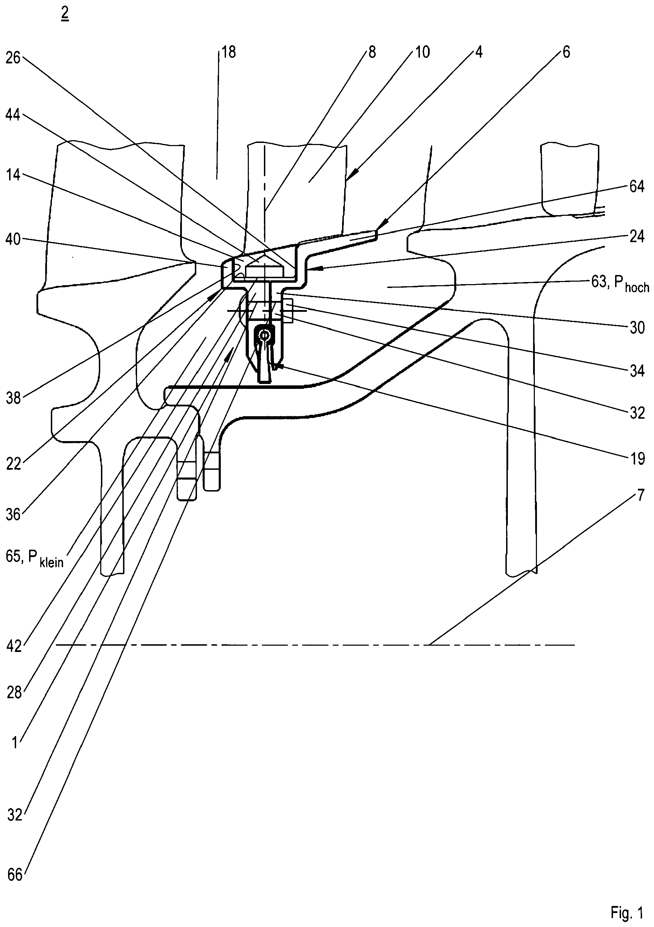

Gemäß der Darstellung in Figur 1 hat ein erfindungsgemäßer Leitschaufelkranzes 1 einer Strömungsmaschine 2, beispielsweise ein Flugzeugtriebwerk, eine Vielzahl von Leitschaufeln 4 und einen Innenring 6. Der Leitschaufelkranz 1 ist verdichterseitig angeordnet und weist beispielsweise 320 Leitschaufeln 4 auf. Er ist so in der Strömungsmaschine 2 ausgerichtet, dass er mit seiner Kranzlängsachse auf einer Rotorlängsachse 7 bzw. Längsachse der Strömungsmaschine 1 liegt.

Die Leitschaufeln 4 bilden eine Leitschaufelreihe und sind um ihre sich in radialer Richtung zur Kranzlängsachse erstreckenden strichpunktiert angedeuteten Hochachse 8 verstellbar. Sie haben jeweils ein Schaufelblatt 10, einen nicht gezeigten äußeren Schaufelteller, einen inneren Schaufelteller 14 sowie einen nicht gezeigten äußeren Verstellzapfen. Die Schaufelteller 12, 14 haben einen Kreisumfang und dienen mit ihren gegenüberliegenden, hier nicht bezifferten Tellerflächen zur radialen Begrenzung eines die Schaufelblätter 10 aufnehmenden Ringraums 18. Der Ringraum 18 wird im Betrieb der Strömungsmaschine in dem gezeigten Ausführungsbeispiel von einem Primärstrom von links nach rechts durchströmt. Der Primärstrom ist hier ein zu verdichtender Luftstrom. Die Verstellzapfen 16 erstrecken sich bezogen auf die Kranzlängsachse bzw. Strömungsmaschinenlängachse radial nach außen rückseitig von den äußeren Schaufeltellern 12 und wirken mit einer nicht gezeigten Verstelleinrichtung außerhalb des Ringraums 18 zusammen. Die Leitschaufeln 4 haben keinen Lagerzapfen zur radial inneren Lagerungen und sind somit radial innen lagerzapfenfrei. Die innere Lagerung der Leitschaufeln 4 erfolgt über ihre inneren Schaufelteller 14 unmittelbar im Zusammenwirken mit dem Innenring 6. Der Wegfall des Lagerzapfens und somit auch der Wegfall von Lagerbuchsen und stattdessen die unmittelbare Lagerung der Leitschaufeln über ihre Schaufelteller in dem Innenring ermöglicht die erfindungsgemäße Anordnung einer im Folgenden noch erläuterten Bürstendichtung 19, da der Innenring 6 weniger Bauraum als ein herkömmlicher Innenring 6 benötigt.

Der Innenring 6 umgreift einen Rotorabschnitt 20 der Strömungsmaschine 1 und ist von diesem radial beabstandet. Er dient zur radial inneren Stabilisierung der Leitschaufeln 4. Er ist axial geteilt und hat somit in Strömungsrichtung des Primärstroms ein stromaufwärtiges bzw. vorderes Ringsegment 22 und ein stromabwärtiges bzw. hinteres Ringsegment 24. Der Innenring 6 weist eine Vielzahl von Lagerausnehmungen 26 auf, die in Umfangsrichtung gleichmäßig voneinander beabstandet sind und abschnittsweise in dem vorderen Ringsegment 22 und dem hinteren Ringsegment 24 angeordnet sind.

In dem hier gezeigten Ausführungsbeispiel sind die Ringsegmente 22, 24 Schmiedeteile, allerdings ist es auch vorstellbar, die Ringsegmente 22, 24 als verschiedenartig hergestellte Bauteile auszuführen. So kann beispielsweise das eine Ringsegment 22 als Schmiedeteil oder Gussteil, und das andere Ringsegment 24 als Blechteil bzw. Blechprofil ausgebildet sein. Die Ringsegmente 22, 24 sind im montierten Zustand über den Umfang geschlossen und umspannen somit einen Winkel von 360°. Zur Montage bzw. zum Bilden des Innenrings 4 haben sie jeweils einen zu den Lagerausnehmungen 26 radial innenliegenden Flansch 28, 30 bzw. Flanschring, in denen einen Vielzahl von axialen Flanschbohrungen 32 zur Aufnahme jeweils eines Verbindungselementes 34 eingebracht ist. Beispielhafte Verbindungselemente sind Schrauben, Schraubbolzen und Nieten, deren Köpfe oder Muttern zusätzlich in einer nicht gezeigten konischen Erweiterung des jeweiligen Flansches 28, 30 versenkt sein können.

Die Lagerausnehmungen 26 sind hälftig in den Ringsegmenten 22, 24 ausgebildet. Sie dienen zur Aufnahme der inneren Schaufelteller 14 und bilden zusammen mit diesen jeweils eine radial innere Lagerstelle. Sie haben jeweils eine Bodenfläche 36 und eine Innenumfangsflächen 38. Aufgrund der bevorzugten hälftigen Anordnung bildet dabei jedes Ringsegment 22, 24 einen Umfangswinkel von 180° aus. Die Innenumfangsflächen 32 der Lagerausnehmungen 26 wirken als Lagerflächen und können mit einer entsprechenden Gleitbeschichtung versehen sein.

Die inneren Schaufelteller 14 haben jeweils eine Außenumfangsfläche 40, die entsprechende Lagerflächen bilden und sich im montierten Zustand in Gleitanlage mit den Innenumfangsflächen 38 der Lagerausnehmungen 26 befinden. Bevorzugterweise sind die Außenumfangsflächen 40 der inneren Schaufelteller 14 ebenfalls mit einer Gleitbeschichtung versehen. In eine der Bodenfläche 36 jeweils zugewandten Stirnfläche 42 der inneren Schaufelteller 14 ist ein sich in radialer Richtung erstreckender Hohlraum 44 zur Gewichtsreduzierung eingebracht. Der Hohlraum 44 ist beispielsweise eine Sacklochbohrung.

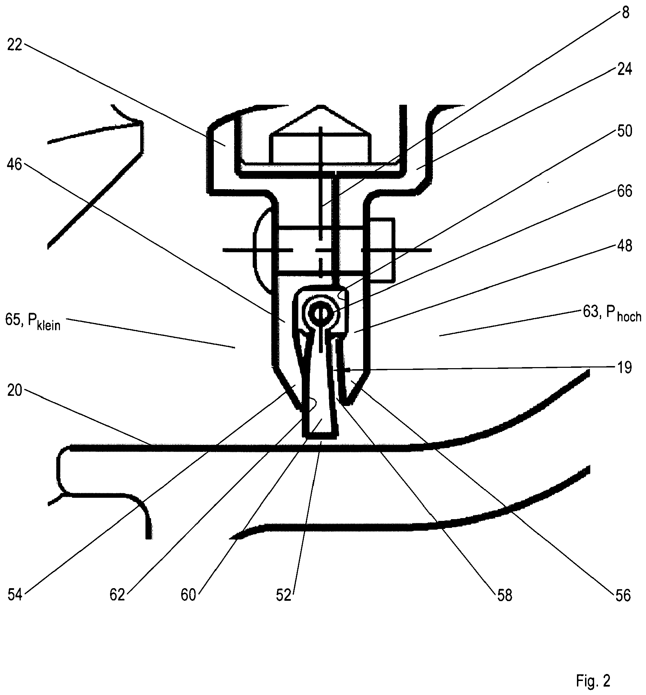

Wie in Figur 2 im Detail gezeigt, sind die Ringsegmente 22, 24 jeweils radial innen über die hier gezeigte Vernietung hinaus verlängert. Sie haben hierzu jeweils eine radiale Verlängerung 46, 48 zwischen denen ein Aufnahmeraum 50 gebildet ist, in dem die Bürstendichtung 19 zum Reduzieren eines Spaltes 52 zum Rotorabschnitt 20 eingesetzt ist.

Die Verlängerungen 46, 48 sind somit axial voneinander beabstandet, wobei sie derart zueinander orientiert sind, dass die Bürstendichtung 19 bzw. deren Bürstenabschnitt 60 in radialer Orientierung mittig auf den Hochachsen 8 der jeweiligen Leitschaufeln 4 liegt. Die Verlängerung 46, 48 haben in etwa die gleiche radial Erstreckung und weisen somit in etwa den gleichen Abstand vom gegenüberliegenden Rotorabschnitt 20 auf. Ihre Endabschnitte 54, 56 sind aufeinander zu orientiert, so dass die Verlängerungen 46, 48 in der gezeigten Schnittansicht klauenartig wirken.

Die Endabschnitte 54, 56 sind dabei derart voneinander beabstandet, dass zwischen ihnen ein Durchführungsbereich 58 zum Durchführen der Bürstendichtung 19 gebildet ist, der breiter als der Bürstenabschnitt 60 der Bürstendichtung 19 ist. Die dabei vordere Verlängerung 46 bildet mit ihrer der Bürstendichtung 19 zugewandten Fläche 62 eine Anlage für den Bürstenabschnitt 60 in Ruhelage und in Betriebslage. Der Bürstenabschnitt 60 hat hier eine derartige axiale Breite, dass er von der hinteren Verlängerung 48 axial beabstandet. Im Betrieb herrscht in einer Kavität 63 radial innen zu einem den Ringraum 18 begrenzenden Plattformvorsprung 64 des hinteren Ringsegments 24 ein hoher Drucks P_{hoch,}, wohingegen in einer vorderen ringsegmentenseitigen Kavität 65 ein niedriger Druck Pₖₗₑᵢₙ herrscht. Durch den Druckunterschied wird der Bürstenabschnitt 60 im Betrieb gegen die vordere Verlängerung 46 gedrückt, wobei der Bürstenabschnitt 60 die Ausbildung eines Sekundärstroms durch den, die Kavitäten 63, 65 miteinander verbindenden Spalt 52 entgegengesetzt zum Primärstrom im Ringraum 18 reduziert bzw. vollständig unterdrückt.

Die Bürstendichtung 19 und insbesondere deren Bürstenabschnitt 60 ist radial orientiert und mit ihrem Halteabschnitt 66 fest in dem Aufnahmeraum 50 zwischen den Verlängerungen 46, 48 mittels der Vernietung eingeklemmt. Sie ist mit ihrem elastisch verformbaren Bürstenabschnitt 60 aus dem Aufnahmeraum 50 durch den Durchführungsbereich 58 geführt und bewirkt somit eine Verkleinerung des Spaltes 52. Der Bürstenabschnitt 60 ist in dem Halteabschnitt 66 eingespannt und in Richtung seines freien Endes beidseits keilförmig erweitert. Die Bürstendichtung 60 hat bevorzugterweise zwei hälftige Ringelemente, die jeweils einen Winkel von 180° aufspannen und dabei mit ihrer umfangseitigen Trennebene in der Trennebene des Innenrings 6 liegen.

Zur Montage wird/werden die Bürstendichtung 19 bzw. deren Ringelemente bevorzugterweise im gerundeten Zustand zwischen den Ringsegmenten 22, 24 in den Aufnahmeraum 50 eingesetzt und dann durch Verbindung der beiden Ringsegmente 22, 24 in radialer Richtung durch einen Formschluss und in Umfangsrichtung durch einen Kraftschluss gesichert.

Beim Auflaufen des Rotorabschnitts 20 auf den Bürstenabschnitt 60 in Folge einer Relativbewegung des Rotors zum Stator gibt der Bürstenabschnitt 60 elastisch nach. Nach Rückgang in seine Ausgangslage nimmt der Bürstenabschnitt 60 wieder seine ursprüngliche Ruhelage ein. Ab einer bestimmten Relativbewegung läuft der Bürstenabschnitt 60 auf die Fläche 64 der hinteren Verlängerung 48 auf und wird in ihrer Nachgiebigkeit verhärtet.

Offenbart ist ein verstellbarer Leitschaufelkranz einer Strömungsmaschine mit einem axial geteilten Innenring, an dem eine Bürstendichtung angeordnet ist, ein Innenring für einen derartigen Leitschaufelkranz sowie eine Strömungsmaschine.

### Bezugszeichenliste

- 1: Leitschaufelkranz
- 2: Strömungsmaschine
- 4: Leitschaufeln
- 6: Innenring
- 7: Rotorlängsachse
- 8: Hochachse
- 10: Schaufelblatt
- 14: innerer Schaufelteller
- 18: Ringraum
- 19: Bürstendichtung
- 20: Rotorabschnitt
- 22: vorderes Ringsegment
- 24: hinteres Ringsegment.
- 26: Lagerausnehmung
- 28: Flansch
- 30: Flansch
- 32: Flanschbohrung
- 34: Verbindungselement
- 36: Bodenfläche
- 38: Innenumfangsfläche
- 40: Außenumfangsfläche
- 42: Stirnfläche
- 44: Hohlraum
- 46: Verlängerung
- 48: Verlängerung
- 50: Aufnahmeraum
- 52: Spalt
- 54: Endabschnitt
- 56: Endabschnitt
- 58: Durchführungsbereich
- 60: Bürstenabschnitt
- 62: Fläche / Anlage
- 63: Kavität
- 64: Plattformvorsprung
- 65: Kavität
- 66: Halteabschnitt

- P_{hoch}: Druck in Kavität 63
- Pₖₗₑᵢₙ: Druck in Kavität 65

## Patentansprüche

1. Verstellbarer Leitschaufelkranz (1) einer Strömungsmaschine (2), mit einer Vielzahl von eine Leitschaufelreihe bildenden Leitschaufeln (4) und mit einem Innenring (6) zum Stabilisieren der Leitschaufelreihe, wobei die Leitschaufeln (4) jeweils einen bezogen auf eine Kranzlängsachse radial äußeren Verstellzapfen (16) zum Zusammenwirken mit einer Verstelleinrichtung haben, und wobei der Innenring (6) axial geteilt ist und in Richtung eines Primärstroms ein vorderes Ringsegment (22) und ein hinteres Ringsegment (24) aufweist, **gekennzeichnet, durch** eine an dem Innenring (6) positionierte Bürstendichtung (19) zum Abdichten eines Spaltes (52) zwischen dem Innenring und (6) einem gegenüberliegenden Rotorabschnitt (20).

2. Verstellbarer Leitschaufelkranz nach Patentanspruch 1, wobei die Bürstendichtung (19) mit ihrem Halteabschnitt (66) in einen Aufnahmeraum (50) zwischen den Ringsegmenten (22, 24) angeordnet ist, der von beiden Ringsegmenten (22, 24) begrenzt ist.

3. Verstellbarer Leitschaufelkranz nach Patentanspruch 1 oder 2, wobei die Bürstendichtung (19) mit ihrem Bürstenabschnitt (60) durch einen Durchführungsbereich (58) aus dem Aufnahmeraum (50) hinausgeführt ist, der breiter als der Bürstenabschnitt (60) im Durchführungsbereich (58) ist.

4. Verstellbarer Leitschaufelkranz nach Patentanspruch 3, wobei die Bürstendichtung (19) mit ihrem Bürstenabschnitt (60) am vorderen Ringsegment (22) anliegt.

5. Verstellbarer Leitschaufelkranz nach einem der vorhergehenden Patentansprüche, wobei die Bürstendichtung (19) Ringelemententeile sind.

6. Verstellbarer Leitschaufelkranz nach einem der vorhergehenden Patentansprüche, wobei die Ringsegmente (22, 24) miteinander verschraubt oder vernietet sind.

7. Verstellbarer Leitschaufelkranz nach einem der vorhergehenden Patentansprüche, wobei die Ringsegmente (46, 48) unterschiedlich hergestellt sind.

8. Verstellbarer Leitschaufelkranz nach einem der vorhergehenden Patentansprüche, wobei die Leitschaufeln (4) im Innenring (6) über einen Schaufelteller (14) geführt sind.

9. Innenring (6) für einen verstellbaren Leitschaufelkranz (1) nach einem der vorhergehenden Patentansprüche.

10. Strömungsmaschine (2) mit einem verstellbaren Leitschaufelkranz (1) nach einem der Patentansprüche 1 bis 8.

## Claims

1. An adjustable guide vane ring (1) of a turbomachine (2), having a plurality of guide vanes (4) that form a guide vane row, and having an inner ring (6) for stabilizing the guide vane row, wherein the guide vanes (4) each have an adjusting pin (16), situated radially outwardly relative to a longitudinal axis of the ring, for cooperating with an adjusting device, and the inner ring (6) is axially split and has a front ring segment (22) and a rear ring segment (24) in the direction of a primary flow, **characterized by** a brush seal (19), positioned on the inner ring (6), for sealing a gap (52) between the inner ring (6) and an opposite rotor portion (20).

2. The adjustable guide vane ring according to Claim 1, wherein the brush seal (19) is situated with its holding portion (66) in a receiving space (50) between the ring segments (22, 24), the receiving space being bounded by the two ring segments (22, 24).

3. The adjustable guide vane ring according to Claim 1 or 2, wherein the brush seal (19) with its brush portion (60) is guided through a leadthrough region (58) out of the receiving space (50), the receiving space being wider than the brush portion (60) in the leadthrough region (58).

4. The adjustable guide vane ring according to Claim 3, wherein the brush seal (19) with its brush portion (60) is contiguous to the front ring segment (22).

5. The adjustable guide vane ring according to any one of the preceding claims, wherein the brush seal (19) is composed of ring element parts.

6. The adjustable guide vane ring according to any one of the preceding claims, wherein the ring segments (22, 24) are screwed or riveted to one another.

7. The adjustable guide vane ring according to any one of the preceding claims, wherein the ring segments (46, 48) are manufactured in different ways.

8. The adjustable guide vane ring according to one of the preceding claims, wherein the guide vanes (4) are guided in the inner ring (6) through a vane plate (14).

9. An inner ring (6) for an adjustable guide vane ring (1) according to any one of the preceding claims.

10. A turbomachine (2) having an adjustable guide vane ring (1) according to any one of Claims 1 to 8.

## Revendications

1. Couronne à aubes directrices réglable (1) d'une machine d'écoulement (2), comportant une pluralité d'aubes directrices (4) formant une rangée d'aubes directrices (4) et un anneau intérieur (6) pour stabiliser la rangée d'aubes directrices, les aubes directrices (4) comportant respectivement un tourillon de réglage (16) radialement extérieur par rapport à un axe longitudinal de la couronne et destiné à coopérer avec un dispositif de réglage et dans laquelle l'anneau intérieur (6) est divisé axialement et présente en direction d'un flux primaire un segment d'anneau avant (22) et un segment d'anneau arrière (24), **caractérisée par** un joint brosse (19) positionné au niveau de l'anneau intérieur (6) pour isoler une fente (52) entre l'anneau intérieur et une section de rotor opposée (20).

2. Couronne à aubes directrices réglable selon la revendication 1 du brevet, dans laquelle le joint brosse (19) est disposé parsa section de retenue (66) dans un espace récepteur (50) entre les segments d'anneau (22,24) et est limité par les deux segments d'anneau (22,24).

3. Couronne à aubes directrices réglable selon la revendication 1 ou 2 du brevet, dans laquelle le joint brosse (19) passe par sa section à brosse (60) dans une zone de passage (58) en provenance de l'espace récepteur (50) qui est plus large que la section à brosse (60) dans la zone de passage.

4. Couronne à aubes directrices réglable selon la revendication 3 du brevet, dans laquelle le joint brosse (19) repose par sa section à brosse (60) au niveau du segment d'anneau avant (22).

5. Couronne à aubes directrices réglable selon une des revendications précédentes du brevet, dans laquelle le joint brosse (19) est constitué par des éléments annulaires.

6. Couronne à aubes directrices réglable selon une des revendications précédentes du brevet, dans laquelle les segments d'anneau (22,24) sont vissés ou rivetés ensemble.

7. Couronne à aubes directrices réglable selon une des revendications précédentes du brevet, dans laquelle les segments d'anneau (46,48) sont fabriqués différemment.

8. Couronne à aubes directrices réglable selon une des revendications précédentes du brevet, dans laquelle les aubes directrices (4) sont guidées dans l'anneau intérieur (6) par un plateau d'aubes (14).

9. Anneau intérieur (6) pour couronne à aubes directrices réglable (1) selon une des revendications précédentes du brevet.

10. Machine d'écoulement (2) comportant une couronne à aubes directrices réglable (1) selon une des revendications 1 à 8 du brevet.
